# EUROPEAN PATENT APPLICATION

(11) **EP 4 765 523 A1**
(43) Date of publication of application: **24.06.2026**
(21) Application number: 24854150.0
(22) Date of filing: 06.08.2024
(51) Int. Cl.: H01S 3/067, H01S 3/23

(54) **FIBER LASER DEVICE**

(30) Priority: 14.08.2023 JP 2023131838
(71) Applicant: Fujikura Ltd., Tokyo 135-8512 (JP)
(72) Inventor: KOBAYASHI, Takuya, Sakura-shi, Chiba 285-8550 (JP)
(74) Representative: Hoffmann Eitle
(86) International application number: PCT/JP2024/028134
(87) International publication number: WO 2025/037560

(57) **Abstract**

A fiber laser device (1) includes: a first pumping light source (12) that emits first pumping light; a first amplification optical fiber (11) to which an active element is added, and which absorbs the first pumping light and amplifies and emits light having a first wavelength; a second amplification optical fiber (21) to which an active element that is the same as the active element added to the first amplification optical fiber (11) is added, and which absorbs the light having the first wavelength and amplifies and emits light having a second wavelength; combiners (31) and (32); and a light reduction unit (60) that is provided on each of the optical paths between the combiners (31) and (32) and the first amplification optical fiber (11), transmits light from the first amplification optical fiber (11), and suppresses transmission of light from the combiners (31) and (32).

## Description

### Technical Field

The present invention relates to a fiber laser device.

### Background Art

Fiber laser devices are used in various fields such as a laser processing field and a medical field. Patent Literature 1 below describes an example of a fiber laser device. This fiber laser device includes a seed light source and an optical amplifier that is connected to the seed light source and amplifies light from the seed light source. The optical amplifier includes an amplification optical fiber optically connected to the seed light source, and a pumping light source that introduces pumping light into the amplification optical fiber from a front side and a rear side. The light from the seed light source entering the amplification optical fiber is amplified by the pumping light from the pumping light source and emitted. In Patent Literature 1, a laser oscillator is used as the pumping light source.

In a general fiber laser device, when an active element added to an amplification optical fiber used for an optical amplifier is ytterbium, the wavelength of the pumping light is 915 nm to 976 nm, and the wavelength of the light to be amplified and emitted is 1060 nm to 1080 nm. Therefore, there is a difference of at least 84 nm between the wavelength of the pumping light and the wavelength of the light to be amplified. When the difference between the wavelength of the pumping light and the wavelength of the light to be amplified is large as described above, transverse mode instability (TMI) or the like due to quantum defects may occur. When transverse mode instability or the like occurs, connection with light in a higher mode occurs, amplified light is likely to leak, and thermal management may be difficult in the case where high power light is emitted. For this reason, there is a demand for suppressing a decrease in beam quality by suppressing occurrence of quantum defects, and emitting high-power light. In order to meet this demand, it is conceivable to make the wavelength of the pumping light close to the wavelength of the light to be amplified. In Patent Literature 1, the wavelength of light amplified by an optical amplifier is 1080 nm, and the wavelength of pumping light is 1018 nm.

[Non Patent Literature 1] Ruixian Li, Hanshuo Wu, Hu Xiao, Jinyong Leng, Liangjin Huang, AND Pu Zhou, "More than 6 kW near single-mode fiber amplifier based on a bidirectional tandem pumping scheme" Vol. 61, No. 23/10 August 2022/Applied Optics

### Summary of Invention

In the case where the wavelength of the light to be amplified and the wavelength of the pumping light are made close to each other as in the fiber laser device of Patent Literature 1, it is conceivable to use, as a pumping light source, a fiber laser that causes light emitted from a semiconductor laser or the like to enter an amplification optical fiber to which the same active element as the active element added to the amplification optical fiber of the optical amplifier is added. With such a configuration of the pumping light source, the light from the semiconductor laser can be brought close to the wavelength of the light amplified by the optical amplifier in the pumping light source.

In a fiber laser device, light having a wavelength amplified by the amplification optical fiber may enter the pumping light source. In a rear pumping light source in which a combiner is provided on a front side that is an emission direction of the laser light of an amplification optical fiber and pumping light is introduced from the combiner toward a rear side, the light may enter the pumping light source as described below. That is, when the light from the seed light source is amplified and the amplified light is emitted, a part of the light may enter the pumping light source due to reflection or the like in the combiner. In addition, in a front pumping light source in which a combiner is provided on the rear side of the amplification optical fiber and pumping light is introduced from the combiner toward the front side, the light may enter the pumping light source as described below. That is, when the light amplified by the amplification optical fiber is emitted from the fiber laser device, the light may be reflected by the emission end or an object to be processed and enter the amplification optical fiber as return light, and a part of the return light may enter the pumping light source from the combiner. As described above, in the case where the active element to be added to the amplification optical fiber of the pumping light source is the same active element as the active element to be added to the amplification optical fiber of the optical amplifier, when a part of the light having a wavelength to be amplified by the amplification optical fiber enters the pumping light source as in these examples, amplification efficiency of the pumping light in the pumping light source may be deteriorated, and as a result, there is a concern that power of the pumping light decreases and power of the light emitted from the fiber laser device decreases.

Therefore, an object of the present invention is to provide a fiber laser device capable of emitting high-power light.

In order to solve the above problems, aspect 1 of the present invention is a fiber laser device including: a first pumping light source capable of emitting first pumping light; a first amplification optical fiber to which an active element is added, capable of absorbing the first pumping light and amplifying and emitting light having a first wavelength; a second amplification optical fiber to which an active element that is the same as the active element added to the first amplification optical fiber is added, capable of absorbing the light having the first wavelength as pumping light and amplifying and emitting light having a second wavelength; a combiner capable of allowing the light having the first wavelength to enter the second amplification optical fiber; and a light reduction unit that is provided on an optical path between the combiner and the first amplification optical fiber, transmits light from the first amplification optical fiber, and suppresses transmission of light from the combiner.

As described above, since the active element added to the first amplification optical fiber and the active element added to the second amplification optical fiber are the same and the first pumping light is converted into light having the first wavelength using the first amplification optical fiber, the first wavelength can be made closer to the second wavelength than the wavelength of the first pumping light. Therefore, according to the fiber laser device of the present aspect, as compared with the case where the first pumping light enters the second amplification optical fiber, it is possible to suppress occurrence of quantum defects in the second amplification optical fiber and to suppress deterioration in the beam quality of the light having the second wavelength emitted from the second amplification optical fiber. In addition, in this fiber laser device, as described above, even when the light of the second wavelength amplified by the second amplification optical fiber travels toward the first amplification optical fiber via the combiner, the light from the combiner is reduced by the light reduction unit. Therefore, propagation of the light having the second wavelength to the first core of the first amplification optical fiber can be suppressed, and a decrease in the amplification efficiency of the light having the first wavelength in the first amplification optical fiber can be suppressed. Therefore, a decrease in the power of the light having the first wavelength entering the second amplification optical fiber as pumping light can be suppressed, and a decrease in the amplification efficiency of the light having the second wavelength in the second amplification optical fiber can be suppressed. Therefore, according to the fiber laser device of aspect 1, high-power light can be emitted.

Aspect 2 of the present invention is the fiber laser device of aspect 1, in which the light reduction unit is a filter that transmits the light having the first wavelength and suppresses transmission of the light having the second wavelength.

According to the configuration of aspect 2, the light reduction unit can more appropriately reduce the light of the second wavelength from the combiner to the first amplification optical fiber.

Aspect 3 of the present invention is the fiber laser device of aspect 2, in which the filter is a mirror that reflects the light having the second wavelength.

According to the configuration of aspect 3, when the light of the second wavelength travels toward the first amplification optical fiber via the combiner, the light of the second wavelength can be reflected in a desired direction. For example, by setting the mirror so as to reflect the light of the second wavelength traveling toward the first amplification optical fiber toward the combiner, the light of the second wavelength can enter the second core of the second amplification optical fiber again and can be amplified by the second core. In this case, it is possible to further suppress a decrease in amplification efficiency in the second amplification optical fiber.

Aspect 4 of the present invention is the fiber laser device of aspect 3, in which the mirror is a fiber bragg grating (FBG).

In this case, the light of the second wavelength traveling toward the first amplification optical fiber can be reflected toward the combiner. Therefore, the light having the second wavelength can enter the second core of the second amplification optical fiber again, and can be amplified by the second core. Accordingly, it is possible to further suppress a decrease in amplification efficiency in the second amplification optical fiber.

Aspect 5 of the present invention is the fiber laser device of aspect 4, in which the FBG is of a slant type.

Aspect 6 of the present invention is the fiber laser device of aspect 2, in which the filter is a photonic bandgap fiber.

A photonic bandgap fiber is excellent in filtering performance that allows transmission of light having a desired wavelength and does not allow transmission of light having other wavelengths. Therefore, it is possible to further suppress propagation of light having the second wavelength to the first amplification optical fiber.

Aspect 7 of the present invention is the fiber laser device of aspect 5 or 6, in which the filter and the first amplification optical fiber are optically connected to each other by an optical fiber including a core and a cladding, and a cladding mode stripper is provided in the middle of the optical fiber.

When a slant FBG or a photonic bandgap fiber is used as a filter, the light of the second wavelength may enter the cladding of the optical fiber. Even in this case, the cladding mode stripper can leak the light propagating through the cladding to the outside of the cladding of the optical fiber. Therefore, the light propagating through the cladding can be further suppressed from entering the first amplification optical fiber.

Note that the light reduction unit may have a configuration other than the filter. An aspect in this case is, for example, the fiber laser device of aspect 1 in which an optical path between the first amplification optical fiber and the combiner includes a first optical fiber optically connected to the first amplification optical fiber and a second optical fiber connected to the first optical fiber and optically connected to the combiner, the light reduction unit includes a connection portion between the first optical fiber and the second optical fiber, and the diameter of the core of the second optical fiber is larger than the diameter of the core of the first optical fiber.

In this aspect, since the light reduction unit is formed by providing a difference between the diameters of the cores of the two optical fibers, the light reduction unit can be simply configured.

Aspect 8 of the present invention is the fiber laser device according to any one of aspects 1 to 7, further including: a second pumping light source capable of emitting second pumping light; and a third amplification optical fiber to which an active element that is the same as the active element added to the second amplification optical fiber is added, capable of absorbing the second pumping light and amplifying and emitting the light having the second wavelength, in which the light having the second wavelength emitted from the third amplification optical fiber enters the second amplification optical fiber from one end side.

Alternatively, aspect 9 of the present invention is the fiber laser device according to any one of aspects 1 to 7, further including: a first mirror that is optically connected to the second amplification optical fiber on one end side of the second amplification optical fiber and reflects the light having the second wavelength; and a second mirror that is optically connected to the second amplification optical fiber on the other end side of the second amplification optical fiber and reflects the light having the second wavelength with a lower reflectance than a reflectance of the first mirror.

As described above, according to the present invention, a fiber laser device capable of emitting high-power light is provided.

### Brief Description of Drawings

[FIG. 1] FIG. 1 is a diagram illustrating a fiber laser device according to a first embodiment of the present invention.
[FIG. 2] FIG. 2 is a diagram illustrating a pumping light source.
[FIG. 3] FIG. 3 is a diagram illustrating an amplification optical fiber.
[FIG. 4] FIG. 4 is a diagram illustrating a seed light source.
[FIG. 5] FIG. 5 is a diagram illustrating a fiber laser device according to a second embodiment of the present invention.
[FIG. 6] FIG. 6 is a diagram illustrating a first modification of a light reduction unit.
[FIG. 7] FIG. 7 is a diagram illustrating a second modification of a light reduction unit.
[FIG. 8] FIG. 8 is a diagram illustrating a photonic bandgap fiber.
[FIG. 9] FIG. 9 is a diagram illustrating a third modification of a light reduction unit.

### Description of Embodiments

Hereinafter, a preferred embodiment of a fiber laser device according to the present invention will be described in detail with reference to the drawings. The embodiment exemplified below is intended to facilitate understanding of the present invention and is not intended to limit the present invention. The present invention can be modified and improved within the scope of the claims without departing from the gist thereof. Note that, for easy understanding, scales in the respective drawings may be different from scales described in the following description.

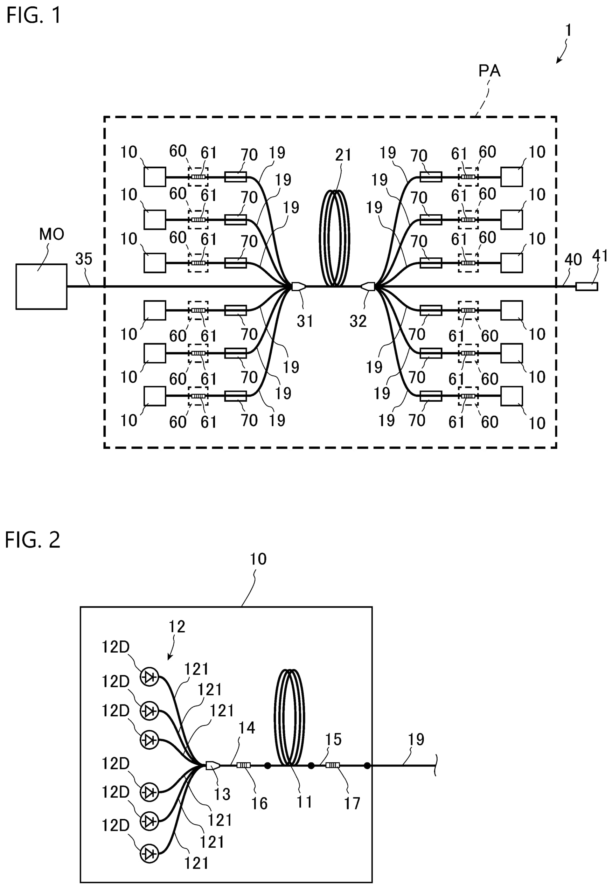

FIG. 1 is a diagram illustrating a laser device according to the present embodiment. As illustrated in FIG. 1, a fiber laser device 1 of the present embodiment mainly includes a seed light source MO and an optical amplifier PA. That is, the fiber laser device 1 of the present embodiment is a master oscillator - power amplifier (MO-PA) type fiber laser device.

First, the optical amplifier PA will be described. The optical amplifier PA mainly includes a plurality of pumping light sources 10, a second amplification optical fiber 21, combiners 31 and 32, and a plurality of light reduction units 60.

FIG. 2 is a diagram illustrating the pumping light source 10. As illustrated in FIG. 2, the pumping light source 10 mainly includes a first amplification optical fiber 11, a first pumping light source 12, an HR-FBG 16, and an OC-FBG 17.

The first pumping light source 12 includes a plurality of laser diodes 12D, and emits first pumping light having a wavelength that pumps an active element added to the first amplification optical fiber 11. When the active element added to the first amplification optical fiber 11 is ytterbium (Yb) as described later, the wavelength of the first pumping light is, for example, 976 nm. Note that the first pumping light source 12 is connected to a predetermined power supply, and emits first pumping light having power corresponding to the current from the power supply. It is preferable that the power supply can vary a current to be output. Each laser diode 12D of the first pumping light source 12 is connected to one end of an optical fiber 121. The other end of each optical fiber 121 is connected to the combiner 13.

One end of an optical fiber 14 to be described later is connected to the combiner 13, and one end of the first amplification optical fiber 11 is connected to the other end of the optical fiber 14.

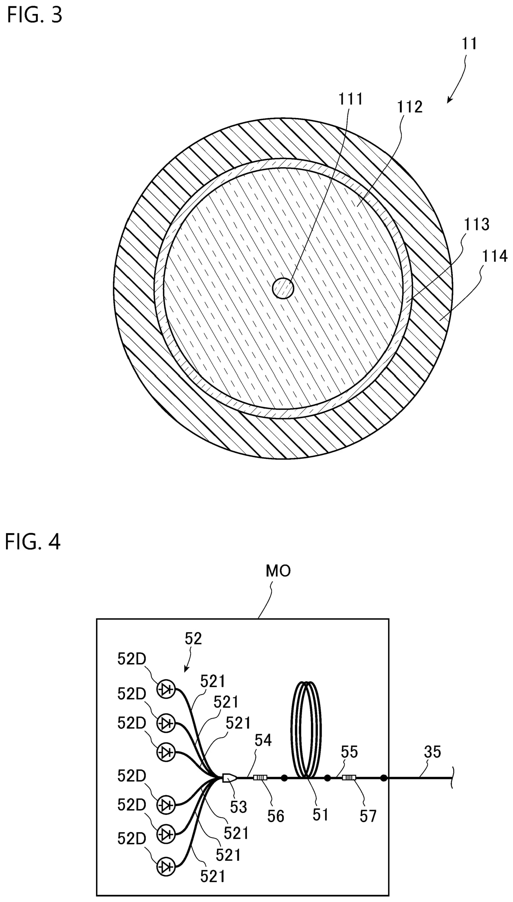

FIG. 3 is a diagram illustrating a state of a cross section of the first amplification optical fiber 11 illustrated in FIG. 2. As illustrated in FIG. 2, the first amplification optical fiber 11 mainly includes a first core 111, a first cladding 112 as an inner cladding surrounding the outer peripheral surface of the first core 111 with no gap, an outer cladding 113 surrounding the outer peripheral surface of the first cladding 112, and a coating layer 114 coating the outer cladding 113. That is, the first amplification optical fiber 11 is a double cladding optical fiber from a structural viewpoint. The refractive index of the first cladding 112 is lower than the refractive index of the first core 111, and the refractive index of the outer cladding 113 is lower than the refractive index of the first cladding 112. The diameter of the first core 111 is, for example, 28 µm, and the outer diameter of the first cladding 112 is, for example, 400 µm. In the present embodiment, the first amplification optical fiber 11 is a multimode optical fiber from an optical viewpoint, and light of, for example, 2LP mode propagates through the first core 111. In addition, first pumping light enters the first cladding 112 as described later, and the first pumping light mainly propagates through the first cladding 112. The length of the first amplification optical fiber 11 is, for example, 20 m.

An active element to be pumped by first pumping light emitted from the first pumping light source 12 is added to the first core 111. In the present embodiment, ytterbium is added as the active element. It is preferable that aluminum and phosphorus are further added to the first core 111 in order to enhance resistance to photo darkening. Furthermore, a dopant such as fluorine (F) or boron (B) may be added to at least a part of the first core 111 in order to adjust the refractive index. Although different from the present embodiment, the active element added to the first core 111 may be an active element other than ytterbium. Examples of such an active element include thulium (Tm), cerium (Ce), neodymium (Nd), europium (Eu), and erbium (Er) in addition to ytterbium. Furthermore, examples of the active element include bismuth (Bi) in addition to the rare earth element.

In addition, the first cladding 112 is made of, for example, pure quartz to which no dopant is added or quartz to which a dopant for reducing the refractive index, such as fluorine, is added. In addition, the outer cladding 113 is made of, for example, a resin having a refractive index lower than that of the first cladding 112, or quartz to which an element for reducing the refractive index such as fluorine is added. The coating layer 114 is made of, for example, a thermosetting or ultraviolet curing resin, and when the outer cladding 113 is made of a resin, the coating layer is made of a resin different from the resin of the outer cladding 113. Note that the first cladding 112 may include a plurality of layers having different refractive indexes and additives.

The optical fiber 14 connected to one end of the first amplification optical fiber 11 has the same configuration as the first amplification optical fiber 11 except that no active element is added to the core. Therefore, the optical fiber 14 includes a core, an inner cladding surrounding the core, an outer cladding surrounding the inner cladding, and a coating layer coating the outer cladding. The first core 111 of the first amplification optical fiber 11 is connected to the core of the optical fiber 14, and the first cladding 112 of the first amplification optical fiber 11 is connected to the inner cladding of the optical fiber 14.

The HR-FBG 16 is provided to the core of the optical fiber 14. In this way, the HR-FBG 16 is provided on one end side of the first amplification optical fiber 11 and is optically connected to the first core 111. The FBG is configured in such a manner that a portion having a high refractive index and a portion having a refractive index lower than the high refractive index are repeatedly formed at a constant period along the longitudinal direction of the core, and can reflect light having a predetermined wavelength and transmit light having another wavelength. By adjusting this period, the HR-FBG 16 reflects at least the light of the first wavelength out of the light emitted by the active element of the pumped first amplification optical fiber 11. The first wavelength is longer than the wavelength of the first pumping light. When the active element added to the first amplification optical fiber 11 is ytterbium as described above, the first wavelength is, for example, 1020 nm, and the HR-FBG 16 reflects the light of the first wavelength at a reflectance of, for example, 99% or more.

In the combiner 13, the core of each optical fiber 121 and the inner cladding of the optical fiber 14 are optically connected. Therefore, the first pumping light emitted from the first pumping light source 12 can propagate to the first cladding 112 of the first amplification optical fiber 11 via the optical fiber 121, the combiner 13, and the inner cladding of the optical fiber 14.

One end of the optical fiber 15 is connected to the other end of the first amplification optical fiber 11. The optical fiber 15 is an optical fiber having a core and a cladding. The first core 111 of the first amplification optical fiber 11 is connected to the core of the optical fiber 15, and the first cladding 112 of the first amplification optical fiber 11 is connected to the cladding of the optical fiber 15.

The OC-FBG 17 is provided to the core of the optical fiber 15. In this way, the OC-FBG 17 is provided on the other end side of the first amplification optical fiber 11, and is optically connected to the first core 111. The OC-FBG 17 is configured to reflect the light of the first wavelength reflected by the HR-FBG 16 with a lower reflectance than that of the HR-FBG 16. For example, the OC-FBG 17 is configured to reflect the light of the first wavelength with a reflectance of, for example, 10%. Thus, the HR-FBG 16, the first amplification optical fiber 11, and the OC-FBG 17 form a resonator that resonates the light of the first wavelength. A part of the light of the first wavelength resonated in the resonator is transmitted through the OC-FBG 17.

The pumping light source 10 having the above configuration emits pumping light that is light having the first wavelength.

The other end of the optical fiber 15 is connected to one end of an optical fiber 19 having the same configuration as that of the optical fiber 15. Note that the optical fiber 15 may be extended to form the optical fiber 19. The other end of the optical fiber 19 is connected to the combiner 31 or the combiner 32.

A light reduction unit 60 is provided in the middle of the optical fiber 19, that is, on the optical path between the combiners 31 and 32 and the first amplification optical fiber 11. The light reduction unit 60 of the present embodiment is a filter that transmits light having the first wavelength and suppresses transmission of light having a second wavelength longer than the first wavelength. In the present embodiment, the filter includes an FBG 61. The FBG 61 constituting the light reduction unit 60 reflects the light of the second wavelength and transmits the light of the first wavelength. In the FBG 61 of the light reduction unit 60 of the present embodiment, an interface between a portion having a high refractive index and a portion having a refractive index lower than that of the portion, which are repeatedly formed at a constant period, is substantially perpendicular to the longitudinal direction of the core of the optical fiber 19. Therefore, the light reduction unit 60 of the present embodiment reflects the light of the second wavelength entering the light reduction unit 60 in a direction opposite to the traveling direction of the light of the second wavelength entering the light reduction unit 60. The second wavelength is, for example, 1064 nm when the active element added to the second amplification optical fiber 21 is ytterbium as described later. The FBG 61 constituting the light reduction unit 60 reflects the light of the second wavelength with a reflectance of, for example, 99% or more.

Further, in the present embodiment, cladding mode strippers 70 are provided between the light reduction unit 60 that is a filter and the combiner 31, and between the light reduction unit 60 and the combiner 32. The cladding mode stripper 70 is a member that leaks light propagating through the cladding of the optical fiber 19 to the outside of the cladding. The configuration of the cladding mode stripper 70 is not particularly limited, but for example, a member having a refractive index equal to or higher than the refractive index of the cladding of the optical fiber 19 may be provided so as to be in contact with the cladding of the optical fiber 19. Note that the cladding mode stripper 70 may be provided at another position as long as light propagating through the cladding of the optical fiber 19 is removed. By providing such a cladding mode stripper 70, it is possible to suppress light from propagating from the combiners 31 and 32 through the cladding of the optical fiber 19 and propagating to the first amplification optical fiber 11. Therefore, a decrease in light amplification efficiency of the pumping light source 10 and damage to the first pumping light source 12 in the pumping light source 10 can be suppressed.

The second amplification optical fiber 21 in the optical amplifier PA is an amplification optical fiber that amplifies and emits light emitted from the seed light source MO. Therefore, the seed light source MO side of the second amplification optical fiber 21 is the rear side, and the side opposite to the seed light source MO side of the second amplification optical fiber 21 is the front side. Since a direction from the rear side toward the front side is a direction in which the light emitted from the fiber laser device 1 propagates, this direction is the forward direction.

Although not particularly illustrated, the second amplification optical fiber 21 has the same configuration as that of the first amplification optical fiber 11. That is, the second amplification optical fiber 21 mainly includes a second core having the same configuration as that of the first core 111, a second cladding having the same configuration as that of the first cladding 112 and serving as an inner cladding that surrounds the outer peripheral surface of the second core with no gap, an outer cladding that surrounds the outer peripheral surface of the second cladding with the same configuration as that of the outer cladding 113, and a coating layer that coats the outer cladding. The same active element as the active element added to the first core is added to the second core.

The combiner 31 is provided on one end side that is the seed light source MO side of the second amplification optical fiber 21, and the combiner 32 is provided on the other end side of the second amplification optical fiber 21. The combiners 31 and 32 each include, for example, an optical fiber having a core and a cladding surrounding the core. In this case, the cores of the combiners 31 and 32 are connected to the second core of the second amplification optical fiber 21, and the claddings of the combiners 31 and 32 are connected to the second cladding of the second amplification optical fiber 21. When the combiners 31 and 32 have such a configuration, the combiners 31 and 32 may be tapered fibers each having a small diameter on the second amplification optical fiber 21 side and a large diameter on the side opposite to the second amplification optical fiber 21 side. As described above, each optical fiber 19 is connected to the combiner 31 or the combiner 32. Specifically, the cores of some of the optical fibers 19 among the optical fibers 19 are optically connected to the second cladding of the second amplification optical fiber 21 in the combiner 31, and the cores of the other optical fibers 19 are optically connected to the second cladding of the second amplification optical fiber 21 in the combiner 32. When the combiners 31 and 32 include optical fibers as described above, the cores of some of the optical fibers 19 are connected to the cladding of the combiner 31, and the cores of the other optical fibers 19 are connected to the cladding of the combiner 32. The number of pumping light sources 10 optically connected to the second cladding via the optical fibers 19 and the combiner 31 and the number of pumping light sources 10 optically connected to the second cladding via the optical fibers 19 and the combiner 32 are preferably equal to each other from the viewpoint of enabling pumping light with higher power to enter the second amplification optical fiber 21. The pumping light source 10 optically connected to the second cladding via the combiner 31 is a front pumping light source that introduces first light as pumping light from the rear side toward the front side of the second amplification optical fiber 21, and the pumping light source 10 optically connected to the second cladding via the combiner 32 is a rear pumping light source that introduces first light as pumping light from the front side toward the rear side of the second amplification optical fiber 21. Note that the configuration of the combiners 31 and 32 is not limited to the above, and for example, the cores of the optical fibers 19 may be directly connected to the second cladding of the second amplification optical fiber 21, and the connection portions may be the combiners 31 and 32.

One end of a delivery fiber 40 having a core and a cladding is connected to the combiner 32. The core of the delivery fiber 40 is optically connected to the second core of the second amplification optical fiber 21 in the combiner 32.

An emission part 41 is connected to the other end of the delivery fiber 40. The emission part 41 is formed of, for example, a glass rod having a diameter larger than that of the core of the delivery fiber 40. Therefore, the diameter of the light entering the emission part 41 from the core of the delivery fiber 40 is widened, and the light is emitted from the emission part 41.

Next, the seed light source MO will be described.

FIG. 4 is a diagram illustrating an example of the seed light source MO. As illustrated in FIG. 4, the seed light source MO mainly includes a third amplification optical fiber 51, a second pumping light source 52, an HR-FBG 56, and an OC-FBG 57. The seed light source MO has substantially the same configuration as that of the pumping light source 10.

Although not particularly illustrated, the third amplification optical fiber 51 has the same configuration as that of the second amplification optical fiber 21. That is, the third amplification optical fiber 51 mainly includes a third core having the same configuration as that of the second core, a third cladding as an inner cladding having the same configuration as that of the second cladding and surrounding the outer peripheral surface of the third core with no gap, an outer cladding having the same configuration as that of the outer cladding of the second amplification optical fiber 21 and surrounding the outer peripheral surface of the third cladding, and a coating layer coating the outer cladding. The same active element as the active element added to the second core is added to the third core. That is, in the present embodiment, the same active element is added to each of the first core 111 of the first amplification optical fiber 11, the second core of the second amplification optical fiber 21, and the third core of the third amplification optical fiber 51. The third amplification optical fiber 51 is a double cladding optical fiber from a structural viewpoint. Note that the third core of the third amplification optical fiber 51 propagates, for example, light of 2LP mode or less.

An optical fiber 54 is connected to one end of the third amplification optical fiber 51. The optical fiber 54 has the same configuration as that of the third amplification optical fiber 51 except that no active element is added to the core. Therefore, the optical fiber 54 includes a core, an inner cladding surrounding the core, an outer cladding surrounding the inner cladding, and a coating layer coating the outer cladding. The third core of the third amplification optical fiber 51 is connected to the core of the optical fiber 54, and the third cladding of the third amplification optical fiber 51 is connected to the inner cladding of the optical fiber 54.

The HR-FBG 56 is provided to the core of the optical fiber 54. In this way, the HR-FBG 56 is provided on one end side of the third amplification optical fiber 51, and is optically connected to the third core of the third amplification optical fiber 51. The HR-FBG 56 reflects the light of the second wavelength. As described above, the second wavelength is, for example, 1064 nm, and the HR-FBG 56 reflects the light of the second wavelength with a reflectance of, for example, 99% or more.

The second pumping light source 52 includes a plurality of laser diodes 52D similar to the plurality of laser diodes 12D of the first pumping light source 12, and emits second pumping light having a wavelength that pumps the active element added to the third amplification optical fiber 51. The power of the second pumping light is, for example, the same as the power of the first pumping light emitted from the first pumping light source 12, and the wavelength of the second pumping light is, for example, the same as the wavelength of the first pumping light emitted from the first pumping light source 12. The second pumping light source 52 is connected to a predetermined power supply, and emits second pumping light having power corresponding to the current from the power supply. It is preferable that the power supply can vary a current to be output. Each laser diode 52D of the second pumping light source 52 is connected to one end of the optical fiber 521. The optical fiber 521 has the same configuration as that of the optical fiber 121. The other end of each optical fiber 521 is connected to the combiner 53. The power of the second pumping light may not be the same as the power of the first pumping light emitted from the first pumping light source 12, and the wavelength of the second pumping light may not be the same as the wavelength of the first pumping light emitted from the first pumping light source 12.

An end of the optical fiber 54 on the side opposite to the side connected to the third amplification optical fiber 51 is connected to the combiner 53. In the combiner 53, the core of each optical fiber 521 and the inner cladding of the optical fiber 54 are optically connected. Therefore, the pumping light emitted from the second pumping light source 52 can propagate to the third cladding of the third amplification optical fiber 51 via the core of the optical fiber 521 and the inner cladding of the optical fiber 54. As described above, the second pumping light source 52 is a light source that introduces the second pumping light from the HR-FBG 56 side into the third cladding of the third amplification optical fiber 51.

One end of the optical fiber 55 is connected to the other end of the third amplification optical fiber 51. The optical fiber 55 has the same configuration as that of the optical fiber 54, and the OC-FBG 57 is provided to the core of the optical fiber 54. In this way, the OC-FBG 57 is provided on the other end side of the third amplification optical fiber 51, and is optically connected to the third core of the third amplification optical fiber 51. The OC-FBG 57 reflects the light of the second wavelength with a reflectance lower than that of the HR-FBG 56, for example, 10%. In this way, a resonator is formed by the HR-FBG 56, the third amplification optical fiber 51, and the OC-FBG 57. A part of the light of the second wavelength resonated in the resonator is transmitted through the OC-FBG 57 and emitted from the seed light source MO.

One end of an optical fiber 35 having the same configuration as that of the optical fiber 55 is connected to the optical fiber 55 of the seed light source MO. Note that the optical fiber 55 may be extended to form the optical fiber 35. The optical fiber 35 propagates the light of the second wavelength emitted from the seed light source MO. The other end of the optical fiber 35 is optically connected to the second amplification optical fiber 21 in the combiner 31, and the core of the optical fiber 35 is optically connected to the second core of the second amplification optical fiber 21. Therefore, the light of the second wavelength emitted from the seed light source MO can enter the second core of the second amplification optical fiber 21 via the core of the optical fiber 35.

Next, operation of the fiber laser device 1 will be described.

First, in the seed light source MO, the second pumping light is emitted from each laser diode 52D of the second pumping light source 52. As described above, the wavelength of the pumping light is, for example, 976 nm. The second pumping light emitted from the second pumping light source 52 enters the third cladding that is the inner cladding of the third amplification optical fiber 51, from one end of the third amplification optical fiber 51 via the combiner 53 and the optical fiber 54 from the optical fiber 521, and mainly propagates through the third cladding. At least a part of the second pumping light propagating through the third cladding is absorbed by the active element added to the third core when passing through the third core surrounded by the third cladding. Therefore, the active element is pumped. The light of the second wavelength is resonated between the HR-FBG 56 and the OC-FBG 57 and amplified, by the light emitted from the active element in the pumped state. A part of the light of the second wavelength is transmitted through the OC-FBG 57 and emitted from the seed light source MO as seed light. In this way, seed light of the second wavelength is emitted from the seed light source MO. As described above, the second wavelength is longer than the first wavelength, and is, for example, 1064 nm.

In addition, in each pumping light source 10, the first pumping light is emitted from each laser diode 12D of the first pumping light source 12. As described above, the wavelength of the pumping light is, for example, 976 nm. The first pumping light emitted from the first pumping light source 12 enters the first cladding 112 that is the inner cladding of the first amplification optical fiber 11, from one end of the first amplification optical fiber 11 via the combiner 13 and the optical fiber 14 from the optical fiber 121, and mainly propagates through the first cladding 112. At least a part of the first pumping light propagating through the first cladding 112 is absorbed by the active element added to the first core 111 when passing through the first core 111 surrounded by the first cladding 112, and the active element is pumped. The light of the first wavelength is resonated between the HR-FBG 16 and the OC-FBG 17 and amplified, by the light emitted from the active element in the pumped state. A part of the light of the first wavelength is transmitted through the OC-FBG 17 and emitted from the pumping light source 10 as pumping light. Thus, the pumping light of the first wavelength is emitted from the pumping light source 10. As described above, the first wavelength is longer than the wavelength of the first pumping light, and is, for example, 1020 nm.

The seed light of the second wavelength emitted from the seed light source MO enters the second core of the second amplification optical fiber 21 from the combiner 31 via the optical fiber 35, and propagates through the second core. The pumping light of the first wavelength emitted from each pumping light source 10 enters the second cladding of the second amplification optical fiber 21 from the combiners 31 and 32 via the optical fiber 19 and the light reduction unit 60, and propagates through the second cladding. The pumping light propagating through the second cladding is absorbed by the active element added to the second core when passing through the second core surrounded by the second cladding. Therefore, the active element is pumped. The pumped active element causes stimulated emission by the seed light propagating through the second core, and the seed light is amplified. That is, the light of the second wavelength is amplified.

The amplified light of the second wavelength is emitted from the emission part 41 via the delivery fiber 40 from the combiner 32. Thus, the light of the second wavelength is emitted from the fiber laser device 1.

A part of the light of the second wavelength amplified by the second amplification optical fiber 21 may be propagated to the optical fiber 19 by reflection or the like in the combiner 32. In addition, when the light of the second wavelength is emitted from the emission part 41, the light is reflected, or the light of the second wavelength emitted from the emission part 41 is reflected by an object to be processed, so that the light of the second wavelength may enter the second amplification optical fiber 21 as reflected light and propagate toward the rear side. In this case, the light of the second wavelength propagating toward the rear side may propagate from the combiner 31 to the optical fiber 19. However, the light reduction unit 60 is provided on the optical path of each optical fiber 19. The light reduction unit 60 suppresses transmission of the light of the second wavelength. Therefore, the light of the second wavelength is prevented from propagating to the first amplification optical fiber 11 of the pumping light source 10. Moreover, in the present embodiment, the light reduction unit 60 includes the FBG 61. As described above, the FBG 61 reflects light of the second wavelength. Therefore, the light of the second wavelength propagating from the combiners 31 and 32 toward the pumping light source 10 is reflected by the light reduction unit 60 toward the combiners 31 and 32.

In addition, even when the light of the second wavelength reflected by the light reduction unit 60 leaks to the cladding of the optical fiber 19, at least a part of the light is leaked to the outside of the optical fiber 19 and removed from the optical fiber 19 by the cladding mode stripper 70.

As described above, the fiber laser device 1 according to the present embodiment includes: the first pumping light source 12 that emits first pumping light; the first amplification optical fiber 11 that includes the first core 111 to which an active element that absorbs the first pumping light is added, and the first cladding 112 surrounding the first core 111 and in which the first pumping light enters, and that amplifies and emits light having a first wavelength by the first core 111; the second amplification optical fiber 21 that includes the second core to which an active element that is the same as the active element that absorbs the light having the first wavelength and is added to the first amplification optical fiber 11 is added, and the second cladding surrounding the second core, and that amplifies and emits light having a second wavelength by the second core; the combiners 31 and 32 that cause the second cladding and the first core 111 to optically connect to each other and that cause the light having the first wavelength to enter the second cladding; and the light reduction unit 60 that is provided on each of optical paths between the combiners 31 and 32 and the first amplification optical fibers 11, transmits light from the first amplification optical fiber 11, and suppresses transmission of light from the combiners 31 and 32.

As described above, since the active element added to the first amplification optical fiber 11 and the active element added to the second amplification optical fiber 21 are the same and the first pumping light is converted into light having the first wavelength using the first amplification optical fiber 11, the first wavelength can be made closer to the second wavelength than the wavelength of the first pumping light. Therefore, according to the fiber laser device 1 of the present embodiment, as compared with the case where the first pumping light enters the second amplification optical fiber 21, it is possible to suppress occurrence of quantum defects in the second amplification optical fiber 21 and to suppress deterioration in the beam quality of the light having the second wavelength emitted from the second amplification optical fiber 21. In addition, in this fiber laser device, as described above, even when the light of the second wavelength amplified by the second amplification optical fiber 21 travels toward the first amplification optical fiber 11 via the combiners 31 and 32, the light from the combiners 31 and 32 is reduced by the light reduction unit 60. Therefore, propagation of the light having the second wavelength to the first core 111 of the first amplification optical fiber 11 can be suppressed, and a decrease in the amplification efficiency of the light having the first wavelength in the first amplification optical fiber 11 can be suppressed. Therefore, a decrease in the power of the light having the first wavelength entering the second amplification optical fiber 21 as pumping light can be suppressed, and a decrease in the amplification efficiency of the light having the second wavelength in the second amplification optical fiber 21 can be suppressed. Therefore, according to the fiber laser device 1 of the present embodiment, high-power light can be emitted.

From the viewpoint of suppressing quantum defects, the difference between the first wavelength and the second wavelength is preferably 50 nm or less, and more preferably 45 nm or less. In addition, in the light reduction unit 60 using the FBG 61, from the viewpoint of transmitting the light having the first wavelength and suppressing transmission of the light having the second wavelength, the difference between the first wavelength and the second wavelength is preferably 5 nm or more, and more preferably 10 nm or more.

### (Second Embodiment)

Next, a second embodiment of the present invention will be described in detail. Note that the same or equivalent components as those of the first embodiment are denoted by the same reference numerals and redundant description is omitted unless otherwise specified.

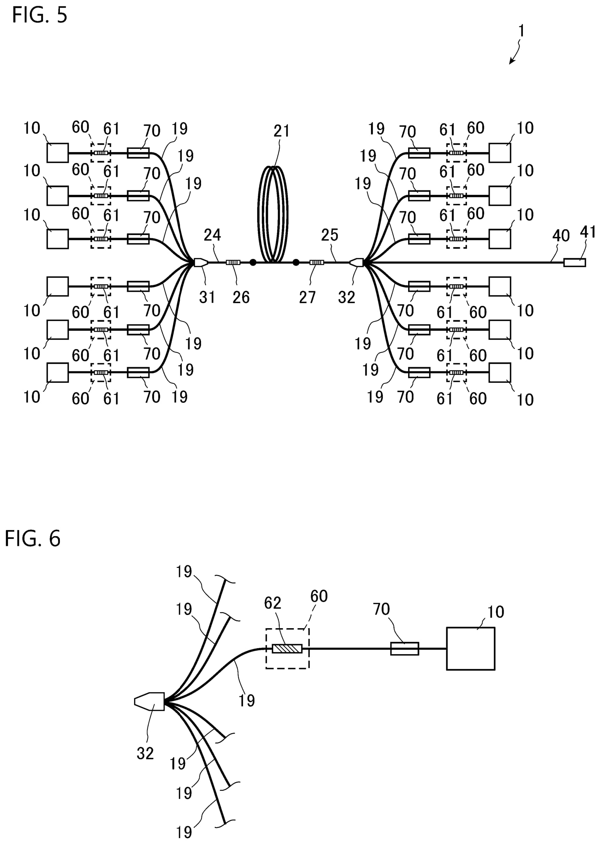

FIG. 5 is a diagram illustrating a fiber laser device according to the present embodiment. As illustrated in FIG. 5, a fiber laser device 1 of the present embodiment is mainly different from the fiber laser device 1 of the first embodiment in that the fiber laser device 1 of the present embodiment does not include the seed light source MO but includes an HR-FBG 26 and an OC-FBG 27. That is, the fiber laser device 1 of the present embodiment is a resonator fiber laser device.

In the present embodiment, the optical fiber 24 is connected to one end of the second amplification optical fiber 21, and the end of the optical fiber 24 on the side opposite to the second amplification optical fiber 21 is connected to the combiner 31. The optical fiber 24 has the same configuration as that of the second amplification optical fiber 21 except that no active element is added to the core. Therefore, the optical fiber 24 includes a core, an inner cladding surrounding the core, an outer cladding surrounding the inner cladding, and a coating layer coating the outer cladding. The second core of the second amplification optical fiber 21 and the core of the optical fiber 24 are connected to each other, and the second cladding of the second amplification optical fiber 21 and the inner cladding of the optical fiber 24 are connected to each other. In the present embodiment, in the combiner 31, the cores of some of the optical fibers 19 are optically connected to the inner cladding of the optical fiber 25.

The core of the optical fiber 24 is provided with the HR-FBG 26 as a first mirror. In this way, the HR-FBG 26 is provided on one end side of the second amplification optical fiber 21, and is optically connected to the second core of the second amplification optical fiber 21. The HR-FBG 26 reflects the light having the second wavelength described above. As described above, the second wavelength is, for example, 1064 nm, and the HR-FBG 26 reflects the light of the second wavelength with a reflectance of, for example, 50% to 99%.

An optical fiber 25 is connected to the other end of the second amplification optical fiber 21, and an end of the optical fiber 25 on the side opposite to the second amplification optical fiber 21 is connected to the combiner 32. The optical fiber 25 has the same configuration as that of the optical fiber 24, and the second core of the second amplification optical fiber 21 and the core of the optical fiber 25 are connected to each other, and the second cladding of the second amplification optical fiber 21 and the inner cladding of the optical fiber 25 are connected to each other. In the present embodiment, in the combiner 32, the cores of some of the other optical fibers 19 are optically connected to the inner cladding of the optical fiber 25.

The core of the optical fiber 25 is provided with the OC-FBG 27 as a second mirror. In this way, the OC-FBG 27 is provided on the other end side of the second amplification optical fiber 21, and is optically connected to the second core of the second amplification optical fiber 21. The OC-FBG 27 reflects the light of the second wavelength with a reflectance lower than that of the HR-FBG 26, for example, 10%. In this way, a resonator is formed by the HR-FBG 26, the second amplification optical fiber 21, and the OC-FBG 27.

Next, operation of the fiber laser device 1 according to the present embodiment will be described.

Similarly to the fiber laser device 1 of the first embodiment, pumping light of the first wavelength is emitted from each pumping light source 10. The pumping light emitted from some of the pumping light sources 10 enters the second cladding of the second amplification optical fiber 21 via the combiner 31 and the inner cladding of the optical fiber 24. The pumping light emitted from the other pumping light sources 10 enters the second cladding of the second amplification optical fiber 21 via the combiner 32 and the inner cladding of the optical fiber 25.

At least a part of the pumping light of the first wavelength propagating through the second cladding of the second amplification optical fiber 21 is absorbed by the active element added to the second core when passing through the second core surrounded by the second cladding. Therefore, the active element is pumped, and the light of the second wavelength resonates between the HR-FBG 26 and the OC-FBG 27 by the light emitted from the pumped active element, and is amplified. A part of the light of the second wavelength is transmitted through the OC-FBG 27. The light of the second wavelength having passed through the OC-FBG 27 is emitted from the emission part 41 via the delivery fiber 40 from the combiner 32. Thus, the light of the second wavelength is emitted from the fiber laser device 1.

Also in the present embodiment, similarly to the first embodiment, light of the second wavelength may propagate from the combiners 31 and 32 to the optical fiber 19. However, even in the present embodiment, since the light reduction unit 60 including the FBG 61 is provided on the optical path of each optical fiber 19, the light reduction unit 60 suppresses transmission of light having the second wavelength as in the first embodiment. Therefore, even in the present embodiment, propagation of the light of the second wavelength to the first amplification optical fiber 11 of the pumping light source 10 is suppressed.

As described above, the fiber laser device 1 according to the present embodiment can also emit high-power light similarly to the fiber laser device 1 according to the first embodiment.

### (Modifications)

Next, modifications of the light reduction unit 60 will be described. Note that the same or equivalent components as those in the above embodiment are denoted by the same reference numerals and redundant description is omitted unless otherwise specified. In the following modifications, one optical path from the combiner 32 to the pumping light source 10 will be described as an example, but other optical paths from the combiner 32 to the pumping light sources 10 and optical paths from the combiner 31 to the pumping light sources 10 are similarly configured.

### (First modification)

FIG. 6 is a diagram illustrating the present modification. As illustrated in FIG. 6, similarly to the above embodiment, the light reduction unit 60 of the present modification is a filter that transmits light having a first wavelength and suppresses transmission of light having a second wavelength longer than the first wavelength, and the filter is an FBG, but is different from the above embodiment in that the FBG is of a slant type. In the slant FBG 62, an interface between a portion having a high refractive index and a portion having a refractive index lower than that of the portion repeatedly formed at a constant period is oblique to the longitudinal direction of the core of the optical fiber 19. Therefore, the light reduction unit 60 of the present modification reflects the light of the second wavelength entering the light reduction unit 60, in a direction different from the direction opposite to the traveling direction of the light of the second wavelength entering the light reduction unit 60.

Further, in the present modification, a cladding mode stripper 70 is provided in the middle of the optical fiber 19 between the light reduction unit 60 that is a filter and the pumping light source 10. In the present modification, the light of the second wavelength entering the light reduction unit 60 can be reflected in a desired direction by the slant FBG 62. When the slant FBG 62 is used as a filter, the light of the second wavelength may enter the cladding of the optical fiber 19. However, in the present modification, the cladding mode stripper 70 can leak the light propagating through the cladding of the optical fiber 19 to the outside of the cladding. Therefore, the light propagating through the cladding can be further suppressed from entering the first amplification optical fiber 11.

When the light of the second wavelength enters the light reduction unit 60, the angle of the interface in the slant FBG 62 may be adjusted such that the light of the second wavelength reflected by the slant FBG 62 leaks from the cladding of the optical fiber 19. For example, by setting the angle to 45 degrees with respect to the longitudinal direction of the optical fiber 19, even when the light of the second wavelength enters the light reduction unit 60, the light can be reflected in a direction of 90 degrees with respect to the longitudinal direction of the optical fiber 19, and the light of the second wavelength can be leaked to the outside of the optical fiber 19 in the light reduction unit 60.

### (Second modification)

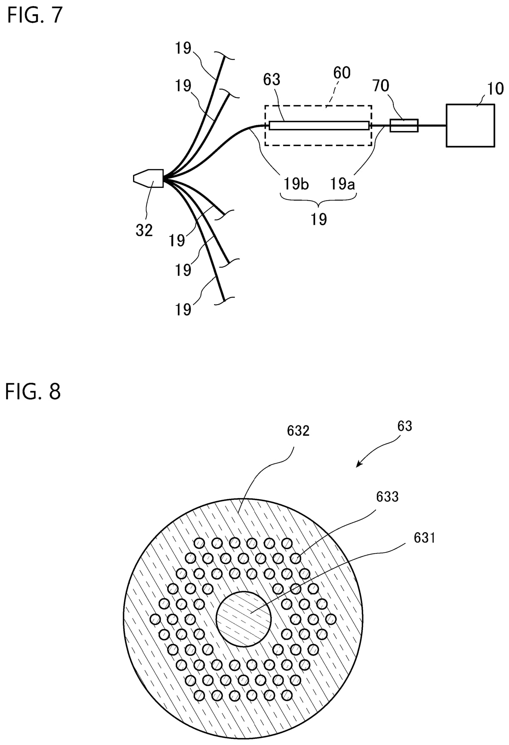

FIG. 7 is a diagram illustrating the present modification. As illustrated in FIG. 7, similarly to the above embodiment, the light reduction unit 60 of the present modification is a filter that transmits light having a first wavelength and suppresses transmission of light having a second wavelength longer than the first wavelength, but the filter includes a photonic bandgap fiber 63. Therefore, in the present modification, the optical fiber 19 is divided into a first optical fiber 19a connected to the pumping light source 10 and a second optical fiber 19b connected to the combiner 32, and the light reduction unit 60 including the photonic bandgap fiber 63 is connected between the first optical fiber 19a and the second optical fiber 19b.

FIG. 8 is a diagram illustrating the photonic bandgap fiber 63. The photonic bandgap fiber 63 includes a core 631, a plurality of high refractive index members 633 disposed so as to surround the core, and a cladding 632 surrounding the core 631 and each of the high refractive index members 633 with no gap. The photonic bandgap fiber 63 is excellent in filtering performance that allows transmission of light having a desired wavelength and does not allow transmission of light having other wavelengths. In the present modification, when the light having the first wavelength enters the core 631 of the photonic bandgap fiber 63, the light having the first wavelength propagates through the core 631, and when the light having the second wavelength enters the core 631, the light having the second wavelength leaks to a portion other than the core 631. Therefore, according to the present modification, it is possible to further suppress propagation of light having the second wavelength to the first amplification optical fiber 11.

When the light of the second wavelength enters the light reduction unit 60, the light of the second wavelength may leak from the photonic bandgap fiber 63 to the cladding of the first optical fiber 19a. However, even in this case, the light propagating through the cladding of the first optical fiber 19a that is a part of the optical fiber 19 can be leaked to the outside of the cladding by the cladding mode stripper 70. Therefore, the light propagating through the cladding can be further suppressed from entering the first amplification optical fiber 11.

When the photonic bandgap fiber 63 is used as a filter as in the present modification, the difference between the first wavelength and the second wavelength is preferably 5 nm or more and more preferably 10 nm or more from the viewpoint of transmitting the light having the first wavelength and suppressing transmission of the light having the second wavelength in the light reduction unit 60.

### (Third modification)

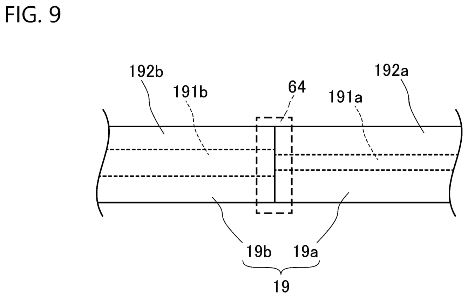

FIG. 9 is a diagram illustrating the present modification. As illustrated in FIG. 9, the present modification is different from the second modification in that the first optical fiber 19a connected to the pumping light source 10 and the second optical fiber 19b connected to the combiner 32 are directly connected to each other at a connection portion 64. The first optical fiber 19a includes a core 191a and a cladding 192a, and the second optical fiber 19b includes a core 191b and a cladding 192b. In the present modification, the diameter of the core 191a of the first optical fiber 19a is larger than the diameter of the core 191b of the second optical fiber 19b. That is, in the present modification, the optical path between the pumping light source 10 and the combiner 32 includes the optical fiber 19 including the first optical fiber 19a and the second optical fiber 19b, the light reduction unit 60 includes the connection portion 64 between the first optical fiber 19a and the second optical fiber 19b, and the diameter of the core 191b of the second optical fiber 19b is larger than the diameter of the core 191a of the first optical fiber 19a.

In the present modification, with the above configuration, a part of the light having the second wavelength propagating from the combiner 32 can leak from the core 191b of the second optical fiber 19b to the outside of the core 191a of the first optical fiber 19a in the connection portion 64. At least a part of the leaking light having the second wavelength may enter the cladding 192a of the first optical fiber 19a, but even in this case, at least a part of the light can be removed by the cladding mode stripper 70. According to the present modification, since the light reduction unit 60 is formed by providing a difference between the diameters of the cores of the two optical fibers, the configuration of the light reduction unit 60 can be simplified.

Although the present invention has been described by taking the embodiments as examples, the present invention is not to be construed as being limited to the above embodiments, and the configuration can be appropriately changed within the scope of achieving the object of the present invention.

For example, a resonator fiber laser is used as the pumping light source 10, but the pumping light source 10 may have another configuration as long as the first pumping light source 12 and the first amplification optical fiber 11 are used.

The light reduction unit 60 may have another configuration as long as light from the first amplification optical fiber is transmitted and transmission of light from the combiner is suppressed, and may be, for example, an isolator.

The cladding mode stripper 70 is not an essential component. However, it is preferable that the fiber laser device 1 includes the cladding mode stripper 70 because unnecessary light of the second wavelength can be removed from the optical fiber 19.

In addition, the fiber laser device 1 according to the above embodiment is a bi-pumping fiber laser device including the pumping light source 10 optically connected to the second amplification optical fiber 21 via the combiners 31 and 32. However, the fiber laser device 1 of the present invention may be a rear-pumped fiber laser device that does not include the pumping light source 10 optically connected to the second amplification optical fiber 21 via the combiner 31 but includes the pumping light source 10 optically connected to the second amplification optical fiber 21 via the combiner 32, or may be a front-pumped fiber laser device that does not include the pumping light source 10 optically connected to the second amplification optical fiber 21 via the combiner 32 but includes the pumping light source 10 optically connected to the second amplification optical fiber 21 via the combiner 31.

As described above, according to the present invention, a fiber laser device capable of emitting high-power light is provided, and is expected to be used in a laser device for processing or the like.

## Claims

1. A fiber laser device comprising:
a first pumping light source capable of emitting first pumping light;
a first amplification optical fiber to which an active element is added, capable of absorbing the first pumping light and amplifying and emitting light having a first wavelength;
a second amplification optical fiber to which an active element that is same as the active element added to the first amplification optical fiber is added, capable of absorbing the light having the first wavelength as pumping light and amplifying and emitting light having a second wavelength;
a combiner capable of allowing the light having the first wavelength to enter the second amplification optical fiber; and
a light reduction unit that is provided on an optical path between the combiner and the first amplification optical fiber, transmits light from the first amplification optical fiber, and suppresses transmission of light from the combiner.

2. The fiber laser device according to claim 1, wherein
the light reduction unit is a filter that transmits the light having the first wavelength and suppresses transmission of the light having the second wavelength.

3. The fiber laser device according to claim 2, wherein
the filter is a mirror that reflects the light having the second wavelength.

4. The fiber laser device according to claim 3, wherein
the mirror is a fiber bragg grating (FBG).

5. The fiber laser device according to claim 4, wherein
the FBG is of a slant type.

6. The fiber laser device according to claim 2, wherein
the filter is a photonic bandgap fiber.

7. The fiber laser device according to claim 5 or 6, wherein
the filter and the first amplification optical fiber are optically connected to each other by an optical fiber including a core and a cladding, and a cladding mode stripper is provided in middle of the optical fiber.

8. The fiber laser device according to any one of claims 1 to 7, further comprising:
a second pumping light source capable of emitting second pumping light; and
a third amplification optical fiber to which an active element that is same as the active element added to the second amplification optical fiber is added, capable of absorbing the second pumping light and amplifying and emitting the light having the second wavelength, wherein
the light having the second wavelength emitted from the third amplification optical fiber enters the second amplification optical fiber from one end side.

9. The fiber laser device according to any one of claims 1 to 7, further comprising:
a first mirror that is optically connected to the second amplification optical fiber on one end side of the second amplification optical fiber and reflects the light having the second wavelength; and
a second mirror that is optically connected to the second amplification optical fiber on another end side of the second amplification optical fiber and reflects the light having the second wavelength with a lower reflectance than a reflectance of the first mirror.
